# EUROPEAN PATENT APPLICATION

(11) **EP 4 365 989 A1**
(43) Date of publication of application: **08.05.2024**
(21) Application number: 22952145.5
(22) Date of filing: 11.11.2022
(51) Int. Cl.: H01M 4/36, H01M 4/58, H01M 4/525, H01M 4/505, H01M 4/485, H01M 10/42, H01M 4/136, H01M 10/0525, H01M 10/0567, H01M 10/48, H01M 10/44

(54) **ACTIVE SUBSTANCE, POSITIVE ELECTRODE MATERIAL, POSITIVE ELECTRODE, BATTERY, BATTERY APPARATUS AND METHOD**

(30) Priority: 24.08.2022 CN 202211021165
(71) Applicant: Battero Tech Corporation Limited, Shanghai 201400 (CN)
(72) Inventor: HUANG, Haining, Shanghai 201400 (CN)
(74) Representative: Vitina, Maruta
(86) International application number: PCT/CN2022/131409
(87) International publication number: WO 2024/040755

(57) **Abstract**

A positive electrode active composite for lithium-ion batteries, consisting of 60%-99% by weight of a lithium iron phosphate material with an olivine structure and 1%-40% by weight of a layered ternary material. A lithium-ion battery, whose positive electrode includes such active composite, is provided, and in normal use, an upper voltage range is controlled between 3.8-4.0 V When there is a certain capacity attenuation, a battery voltage can be increased to a range of greater than or equal to 4.1 V and less than or equal to 4.4 V for activation. Under the activation voltage, the lithium-rich ternary material can compensate for the active lithium loss after the battery aging.

## Description

### TECHNICAL FIELD

This application relates to lithium (Li)-ion batteries, and more particularly to an active composite, a positive electrode material, a positive electrode, a battery, a battery device and a method.

### BACKGROUND

During the initial formation of a lithium-ion battery, the electrode material is reacted with the electrolyte at a solid-liquid interface to form a solid electrolyte interface (SEI), which is accompanied by the consumption of lithium ions inside the battery, causing the battery capacity loss. In addition, the lithium loss also occurs inevitably and irreversibly during the actual use of lithium-ion batteries.

Therefore, it is necessary to develop a new active composite, a positive electrode material, a positive electrode, a battery, a device and a method to improve some of the above problems existing in the prior art.

### SUMMARY

An object of the disclosure is to provide an active composite, a positive electrode material, a positive electrode, a battery, a battery device and a method, so as to replenish lithium in the battery for the loss of active lithium during the formation or subsequent use process of the lithium-ion batteries.

In order to achieve the above object, the following technical solutions are adopted herein.

In a first aspect, this application provides a positive electrode active composite for a lithium-ion battery, wherein the positive electrode active composite consists of 60%-99% by weight of a lithium iron phosphate material and 1%-40% by weight of a ternary material. The ternary material is introduced in the lithium iron phosphate material, such that the positive electrode active composite provided herein is composed of 60%-99% by weight of the lithium iron phosphate material and 1%-40% by weight of the ternary material, where relatively abundant lithium is stored in crystal lattices of the ternary material. For a lithium-ion battery whose positive electrode contains such active composite, it is charged to reach an activation voltage (4.1 V≤ activation voltage ≤4.4 V), under which the lithium-rich ternary material can replenish the battery with lithium, thereby improving the battery capacity and battery cycle life.

In some embodiments, the ternary material comprises lithium nickel manganese cobalt oxide or lithium nickel cobalt aluminum oxide.

In a second aspect, this application provides a positive electrode material for a lithium-ion battery, comprising a binder, a conductive agent and the positive electrode active composite.

In a third aspect, this application provides a positive electrode of a lithium-ion battery, comprising a current collector and the positive electrode material which is coated on or filled in the current collector.

In a fourth aspect, this application provides a lithium-ion battery, comprising a cell and an electrolyte; wherein the cell comprises the positive electrode, a negative electrode and a separator; and the separator is located between the positive electrode and the negative electrode.

In some embodiments, the electrolyte comprises an electrolyte additive, and the electrolyte additive is selected from the group consisting of a boron-containing additive, a sulfur-containing additive and a carbonate additive. The electrolyte additive can stabilize an interface between the electrode and the electrolyte, or form a passivation film on a surface of the positive electrode, so as to reduce the degradation of electrode surfaces and the oxidative decomposition of the electrolyte, thereby reducing the risk of battery bulging caused by gas generated inside and improving the battery safety.

In a fifth aspect, this application provides a lithium-ion battery device, comprising a voltage control module and the lithium-ion battery; wherein the voltage control module comprises a storage unit, a monitoring unit and a control unit; the storage unit is configured to store a preset voltage value, wherein the preset voltage value comprises an upper limit voltage value V1, and the upper limit voltage value V1 is greater than or equal to 3.8 V and less than or equal to 4.0 V; the monitoring unit is configured to monitor an operating voltage of the lithium-ion battery and generate an operating voltage value V0; and the control unit, the storage unit and the monitoring unit are electrically connected with each other, and the voltage control module is configured to control the lithium-ion battery to stop being charged when the operating voltage value V0 is greater than or equal to the upper limit voltage value V1.

In some embodiments, the preset voltage value further comprises a lower limit voltage value V2, and the lower limit voltage value V2 is greater than or equal to 2 V and less than or equal to 2.8 V; and the voltage control module is configured to control the lithium-ion battery to stop discharging when V0 is less than or equal to the lower limit voltage value V2.

The lithium-ion battery device has the following beneficial effects. The control unit is used to determine whether the operating voltage of the lithium-ion battery obtained by the monitoring unit is within a range prestored in the storage unit (i.e., from the lower limit voltage value to the upper limit voltage value). If the operating voltage is not within the range, the lithium-ion battery is controlled to terminate charging or discharging, such that the lithium-ion battery, whose positive electrode is formed by mixing the lithium iron phosphate material and the ternary material, is operated within a suitable voltage range for both materials, thus simultaneously taking advantages of the high safety and long service life of the lithium iron phosphate material and the advantages of the high energy density of the ternary material.

In a sixth aspect, this application provides a method for operating the lithium-ion battery, comprising: controlling an operating voltage value V0 of the lithium-ion battery to be less than or equal to an upper limit voltage value V1; wherein the upper limit voltage value V1 is greater than or equal to 3.8 V and less than or equal to 4.0 V

In some embodiments, the method further comprises controlling the operating voltage value V0 of the lithium-ion battery to be greater than or equal to a lower limit voltage value V2; wherein the lower limit voltage value V2 is greater than or equal to 2 V and less than or equal to 2.8 V

The lithium-ion battery operating method provided herein has the following beneficial effects. Whether the operating voltage of the lithium-ion battery is within a preset range from the lower limit voltage value to the upper limit voltage value is determined. If the operating voltage is not within the range, the lithium-ion battery is controlled to terminate the charging or discharging, such that the lithium-ion battery, whose positive electrode is formed by mixing the lithium iron phosphate material and the ternary material, is operated within a suitable voltage range for both materials, thus simultaneously taking advantages of the high safety and long service life of the lithium iron phosphate material and the advantages of the high energy density of the ternary material.

In a seventh aspect, this application provides an active lithium replenishment method for the above lithium-ion battery, comprising: charging the lithium-ion battery to an activation voltage V3; wherein the activation voltage V3 is greater than or equal to 4.1 V and less than or equal to 4.4 V

The beneficial effects of the active lithium replenishment method are described as follows. After the lithium-ion battery is charged to reach the activation voltage V3 (within a range from greater than or equal to 4.1 V and less than or equal to 4.4 V), the lithium-rich ternary material can replenish lithium for the active lithium loss occurring in the initial formation and subsequent use process, thereby improving the battery capacity and cycle life.

### BRIEF DESCRIPTION OF THE DRAWINGS

Fig. 1 is a structural block diagram of a lithium-ion battery device in accordance with an embodiment of the present disclosure;
Fig. 2 shows capacity attenuation curves of lithium-ion batteries provided in Embodiments 1, 2, and 4 of the present disclosure and Comparative Examples 1-3; and
Fig. 3 depicts capacity attenuation curves of Embodiments 2-6 of the present disclosure.

### DETAILED DESCRIPTION OF EMBODIMENTS

In order to make the purpose, technical solutions and advantages of the embodiments of the present disclosure clearer, the technical solutions in the embodiments of the present disclosure will be clearly and completely described below. Obviously, provided herein are merely some of the embodiments of the disclosure, instead of all of the embodiments. Based on the embodiments of the disclosure, all other embodiments obtained by those of ordinary skill in the art without making creative efforts shall fall within the scope of the disclosure defined by the appended claims. Unless otherwise defined, technical or scientific terms used herein shall have the same meaning as commonly understood by those of ordinary skill in the art to which this application belongs. As used herein, terms "comprise" and similar words are intended to mean that the element or object appearing before the term include the elements or objects listed thereafter and their equivalents, without excluding other elements or objects.

In the prior art, the positive electrode material for the commercially-available batteries is predominated by lithium iron phosphate and ternary materials. Generally, these two cathode material systems have different operating voltage ranges. Specifically, the lithium iron phosphate batteries have a voltage range of 2.5-3.65 V or 2.0-3.8 V and an operating voltage platform of about 3.2 V The ternary batteries have an operating voltage range of 2.8-4.2 or 4.40 V and an operating voltage platform of about 3.7 V. Due to the different voltage ranges, the two material systems cannot be mixed together for use.

In the prior art, the lithium iron phosphate batteries suffer an active lithium loss during the initial formation and subsequent use process. In order to increase the battery capacity, the batteries need to be replenished with lithium. Excessive lithium replenishment will easily cause lithium precipitation at the negative electrode, and the insufficient lithium replenishment cannot achieve an expected effect. Therefore, it is of great importance to design a targeted lithium replenishment strategy.

In the prior art, a theoretical life of ternary lithium-ion batteries is much lower than that of the lithium iron phosphate batteries.

In order to solve the problems existing in the prior art, an embodiment of the present disclosure provides a positive electrode active composite for a lithium-ion battery, which consists of 60%-99% by weight of a lithium iron phosphate material and 1%-40% by weight of a ternary material. In other words, if mass percentages of the lithium iron phosphate material and the ternary material in the positive electrode active composite are X and Y, respectively, 60% ≤ X ≤ 99% and 1% ≤ Y ≤ 40%.

In some embodiments, the positive electrode active composite can be physically mixed during the slurry preparation, which are mixed by adding the lithium iron phosphate material and the ternary material simultaneously to a slurry of NMP solvent.

In some embodiments, the positive electrode active composite can be composed of 60% by weight of the lithium iron phosphate material and 40% by weight of the ternary material; 65% by weight of the lithium iron phosphate material and 35% by weight of the ternary material; 70% by weight of the lithium iron phosphate material and 30% by weight of the ternary material; 75% by weight of the lithium iron phosphate material and 25% by weight of the ternary material; 80% by weight of the lithium iron phosphate material and 20% by weight of the ternary material; 85% by weight of the lithium iron phosphate material and 15% by weight of the ternary material; 90% by weight of the lithium iron phosphate material and 10% by weight of the ternary material; 95% by weight of the lithium iron phosphate material and 5% by weight of the ternary material; or 99% by weight of the lithium iron phosphate material and 1% by weight of the ternary material. In other words, when mass percentages of the lithium iron phosphate material and the ternary material in the positive electrode active composite are X and Y, respectively, X+Y=100%, where 60% ≤ X ≤ 99% and 1% ≤ Y ≤ 40%. In a specific embodiment of the present disclosure, the lithium iron phosphate material LFP is LiFePO₄, which has a full battery capacity of 143 mAh/g within a voltage range of 2.5-3.85 V, a particle size D50 of 1.1 µm and a carbon coating content of 1.2%. The ternary material specifically used herein is a NCM 712 material with a quasi-single crystal morphology and a chemical formula of LiNi_{0.7}Co_{0.1}Mn_{0.2}O₂, which has a full battery capacity of 110 mAh/g within a voltage range of 2.5-3.85 V, a full battery capacity of 188 mAh/g within an activation voltage range of 2.5-4.25V and a particle size D50 of 4.3 µm.

In some embodiments, the positive electrode active composite consists of the lithium iron phosphate material with an olivine structure and the ternary material with a layered structure.

In some embodiments, the ternary material is NCM712.

In some embodiments, the positive electrode active composite is used for manufacturing positive electrode materials for lithium-ion batteries.

In some embodiments, a lithium-rich ternary material is introduced into the lithium iron phosphate material of the lithium-ion battery made of the positive electrode active composite, such that the ternary material can participate in the work of the battery as an electrode positive material while realizing lithium replenishment, so as to improve the energy density of the positive electrode.

In some embodiments, the lithium iron phosphate material and the ternary material are mixed to obtain a positive electrode active composite for a lithium-ion battery, which consists of 60%-99% by weight of a lithium iron phosphate material and 1%-40% by weight of a ternary material. An operating upper limit voltage and an operating lower limit voltage of a battery made of the positive electrode active composite are respectively controlled between a upper voltage limit of 3.8-4.0 V and a lower voltage limit of 2-2.8 V, which can take into account operating voltage ranges of the lithium iron phosphate material and the ternary material, thus simultaneously taking advantages of the high safety and long service life of the lithium iron phosphate material and the high energy density of the ternary material.

Specifically, the dissolution of iron ions in a lithium iron phosphate positive electrode material of a lithium-ion battery may cause direct attenuation of battery capacity and increase in battery self-discharge, or even cause damage to a solid electrolyte interface film, thereby greatly reducing battery cycle performance. The lithium-ion battery containing the positive electrode active composite has an upper operating voltage controlled within a range of 3.8-4.0 V, relatively controllable iron dissolution and relatively few side reactions at a positive electrode interface.

In some embodiments, the ternary material includes any one of lithium nickel manganese cobalt oxide or lithium nickel cobalt aluminum oxide.

In some embodiments of the disclosure, the ternary material is one of LiNi_{0.7}Co_{0.1}Mn_{0.2}O₂, LiNi_{0.6}Co_{0.2}Mn_{0.2}O₂ and LiNi_{0.8}Co_{0.1}Mn_{0.2}O₂.

An embodiment of the present application provides a positive electrode material for a lithium-ion battery, including a binder, a conductive agent and said positive electrode active composite.

In some embodiments, the lithium iron phosphate material and the ternary material are respectively made into a slurry through a series of processes such as mixing, dissolving, and dispersing. The positive electrode material is obtained by mixing the slurry made of the lithium iron phosphate material and the slurry made of the ternary material, where a mass ratio of the lithium iron phosphate material to the ternary material is (60-99%): (40-1%).

An embodiment of the present application provides a positive electrode of a lithium-ion battery, including a current collector and the positive electrode material. The positive electrode material is coated on or filled in the current collector.

An embodiment of the present application provides a lithium-ion battery, including a cell and an electrolyte. The cell includes the positive electrode, a negative electrode and a separator.

In some embodiments, the electrolyte includes an electrolyte additive. The lithium-ion battery made of the positive electrode active composite has an upper operating voltage controlled within a range of 3.8-4.0 V and a relatively controllable electrolyte oxidation issue. The electrolyte additive is added to form a passivation film or a polymer film on a surface of the positive electrode, so as to reduce the degradation of electrode surfaces and the oxidative decomposition of the electrolyte.

In some embodiments, the electrolyte includes a lithium salt, a solvent and an electrolyte additive. The lithium salt is lithium hexafluorophosphate or lithium bisfluorosulfonyl imide. The solvent is selected from the group consisting of ethylene carbonate, diethyl carbonate, dimethyl carbonate, ethyl methyl carbonate, ethyl acrylate and propylene carbonate. The electrolyte additive is one of a boron-containing additive, a sulfur-containing additive and a carbonate additive.

In some embodiments, the electrolyte additive is selected from the group consisting of propylene sulfite (PS), 1,3-propenyl-sultone (PST), vinyl ethylene carbonate (VEC) and adiponitrile (SN), and plays a role in suppressing the gas generation of the lithium-ion battery during storage.

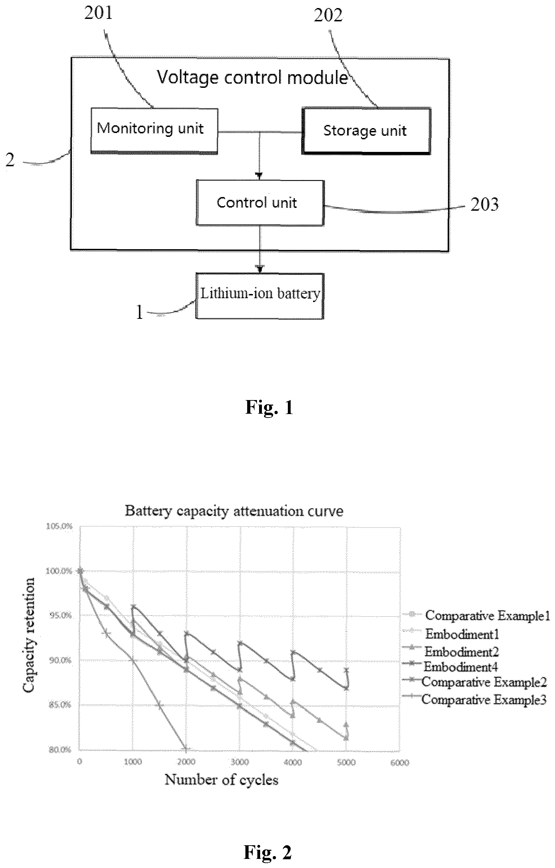

Fig. 1 is a structural block diagram of a lithium-ion battery device in accordance with an embodiment of the present disclosure.

As shown in Fig. 1, the lithium-ion battery device includes the above lithium-ion battery 1 and a voltage control module 2.

The voltage control module 2 includes a monitoring unit 201, a storage unit 202 and a control unit 203.

The storage unit 202 configured to store a preset voltage value. The preset voltage value includes an upper limit voltage value V1 and a lower limit voltage value V2. Specifically, for the lithium-ion battery 1, the upper limit voltage value V1 is greater than or equal to 3.8 V and less than or equal to 4.0 V, and the lower limit voltage value V2 is greater than or equal to 2 V and less than or equal to 2.8 V

The monitoring unit 201 is configured to monitor an operating voltage of the lithium-ion battery 1 and generate an operating voltage value V0.

The control unit 203, the storage unit 202 and the monitoring unit 201 are electrically connected with each other. The voltage control module is configured to control the lithium-ion battery to stop being charged or being discharged when the operating voltage value V0 is greater than or equal to the upper limit voltage value V1.

In some embodiments, the monitoring unit 201 includes a battery voltage monitoring circuit directly connected to the lithium-ion battery 1, which is configured to obtain the voltage of the lithium-ion battery.

In some embodiments, the control unit 203 includes a comparator and a switch provided in an output circuit of the lithium-ion battery 1. The comparator is configured to receive the operating voltage value V0 from the monitoring unit 201 and compare V0 with the preset upper limit voltage value V1 and the lower limit voltage value V2 stored in the storage unit 202. When the operating voltage value V0 is not within a range from the lower limit voltage value V2 to the upper limit voltage value V1, the switch is disconnected by the comparator to stop the charging or discharging of the lithium-ion battery 1.

In some embodiments, the upper limit voltage value V1 can be 3.85 V, 3.95 V or 4.0 V In some embodiments, the lower limit voltage value V2 can be 2 V, 2.2 V, 2.4 V, 2.6 V or 2.8 V

An embodiment of the present application provides a method for operating the lithium-ion battery. An operating voltage value V0 of the lithium-ion battery is controlled to be less than or equal to an upper limit voltage value V1 and greater than or equal to a lower limit voltage value V2. The upper limit voltage value V1 is greater than or equal to 3.8 V and less than or equal to 4.0 V, and the lower limit voltage value V2 is greater than or equal to 2 V and less than or equal to 2.8 V

It should be noted that the steps of the method for operating the above lithium-ion battery correspond to a structure and principle of the above lithium-ion battery device, thus no further description will be provided herein.

An embodiment of the present application provides an active lithium replenishment method for the lithium-ion battery. The lithium-ion battery is charged to an activation voltage V3. The activation voltage V3 is greater than or equal to 4.1 V and less than or equal to 4.4 V, so as to ameliorate the loss of active lithium occurring during a charging cycle or a discharging cycle of the lithium-ion battery in subsequent use process, and effectively replenish the lithium-ion battery with lithium according to an actual state of the battery and a loss amount of the active lithium.

In some embodiments, after a cell capacity is subjected to a certain attenuation with an attenuation capacity of Cₗₒₛₛ, the lithium-ion battery is charged to reach the activation voltage V3. The activation voltage V3 is greater than or equal to 4.1 V and less than or equal to 4.4 V, and an increased charging capacity from V1 to V3 is not greater than the attenuation capacity Cₗₒₛₛ.

Therefore, in some other embodiments, a lithium-ion battery is provided. The lithium-ion battery includes a cell. The cell includes a positive electrode and a negative electrode. The positive electrode includes a positive electrode material. The positive electrode material includes a positive electrode active composite for a lithium-ion battery. The positive electrode active composite includes a lithium iron phosphate material and a ternary material physically mixed. The positive electrode active composite is set to have mass percentages of the lithium iron phosphate material and the ternary material of X and Y, respectively, X+Y=100%, where 60% ≤ X ≤ 99% and 1% ≤ Y ≤ 40%. An operating voltage value V0 of the lithium-ion battery is controlled to be less than or equal to an upper limit voltage value V1, and the upper limit voltage value V1 is greater than or equal to 3.8 V and less than or equal to 4.0 V The operating voltage value V0 of the lithium-ion battery is also controlled to be greater than or equal to a lower limit voltage value V2, and the lower limit voltage value V2 is greater than or equal to 2 V and less than or equal to 2.8 V Furthermore, the lithium-ion battery is charged to reach an activation voltage V3, where the activation voltage V3 is greater than or equal to 4.1 V and less than or equal to 4.4 V Therefore, the positive electrode active composite is obtained by physically mixing the lithium iron phosphate material and the ternary material, an operating upper limit voltage of the lithium-ion battery made of the active composite is controlled within a range of 3.8-4.0 V, and an operating lower limit voltage of the lithium-ion battery made of the active composite is controlled within a range of 2-2.8 V, such that the lithium-ion battery, whose positive electrode is formed by mixing the lithium iron phosphate material and the ternary material, is operated within a suitable voltage range for both materials, thus simultaneously taking advantages of the high safety and long service life of the lithium iron phosphate material and the high energy density of the ternary material. Furthermore, for the loss of the active lithium occurring in subsequent use of a secondary battery containing a material formed by mixing the lithium iron phosphate material and the ternary material, the battery can be charged to reach within a range of 4.1-4.4 V, under which the battery can be replenished with lithium under the activation voltage, thereby improving the battery capacity and battery cycle life.

The positive electrode active composites for lithium-ion batteries provided in Embodiments 1-6 each consist of 60%-90% by weight of the lithium iron phosphate material and 1%-40% by weight of the ternary material, referring to Table 1 for the specific compositive and voltage parameter. Comparative Examples 1-3 provide a 0.5% ternary material-99.5% lithium iron phosphate material battery, a lithium iron phosphate material battery and a ternary material battery, respectively, referring to Table 1. In other words, if mass percentages of the lithium iron phosphate material and the ternary material in the positive electrode active composite are X and Y, respectively, X+Y=100%, where 60% ≤ X ≤ 99% and 1% ≤ Y ≤ 40%.

**Table 1 Parameters of batteries in Embodiments 1-6 and Comparative Examples 1-3**

| Number | Proportion of lithium iron phosphate material | Proportion of ternary material | Operating voltage value | Activation voltage value |
|---|---|---|---|---|
| Comparative Example 1 | 99.5% | 0.5% | 2.0-4 V | / |
| Embodiment 1 | 99% | 1% | 2.0-4 V | / |
| Embodiment 2 | 90% | 10% | 2.0-4 V | 4.25 V |
| Embodiment 3 | 90% | 10% | 2.0-4 V | Unactivated |
| Embodiment 4 | 80% | 20% | 2.0-4 V | 4.25 V |
| Embodiment 5 | 70% | 30% | 2.0-4 V | 4.25 V |
| Embodiment 6 | 60% | 40% | 2.0-4 V | 4.25 V |
| Comparative Example 2 | 100% | 0% | 2.0-4 V | / |
| Comparative Example 3 | 0 | 100% | 2.5-4.25 V | / |

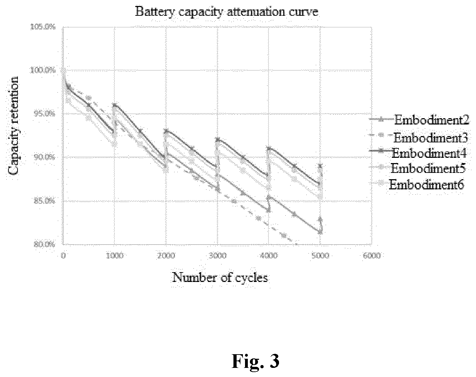

Fig. 2 shows capacity attenuation curves of lithium-ion batteries provided in Embodiments 1, 2, and 4 of the present disclosure and Comparative Examples 1-3. Fig. 3 depicts capacity attenuation curves of Embodiments 2-6 of the present disclosure.

The lithium-ion batteries of Embodiments 1-6 and the batteries in Comparative Examples 1-3 were tested for service life respectively. As shown in Figs. 2-3, the battery life of the lithium-ion batteries is attenuated slowly in a normal operating voltage range of 2.0-4 V. When a battery system was aged, i.e., after the active lithium is consumed to a certain extent, an upper limit of use voltage could be increased through charging activation to release excess lithium in the system, thereby achieving capacity recovery and extending the cycle life, and a cycle capacity retention rate of the lithium-ion batteries was better than that of the ternary material battery and the lithium iron phosphate material battery. Meanwhile, it could be known from experiments that when the proportion of the ternary material was less than 1%, there was no obvious effect on the battery life.

Referring to Fig. 3, it can be found from comparison between Embodiments 3 and 4 that after a certain attenuation of the cycle, a corresponding capacity recovery can be achieved by subjecting the battery to a high-voltage activation treatment, which can significantly improve the cycle life of a battery cell. It can be found from the comparison between Embodiments 1-6 that as the proportion of the ternary material is increased, the cycle life is first increased and subsequently decreased to a certain extent. It can be seen that the increase in cycle life is related to an increase in a proportion of a lithium-rich ternary material. As the proportion of the ternary material is further increased, a side-reaction attenuation between the positive electrode and the electrolyte is also increased, resulting in a corresponding decrease in subsequent life. The lithium-ion batteries of Examples 1, 2, 3, and 4 and the batteries of Comparative Examples 2 and 3 were respectively subjected to compacted density tests. Referring to Table 2, a compacted density of the lithium-ion batteries was higher than that of the lithium iron phosphate material battery of Comparative Example 2. In other words, if mass percentages of the lithium iron phosphate material and the ternary material in the positive electrode active composite are X and Y, respectively, 60% ≤ X ≤ 99% and 1% ≤ Y ≤ 40%.

**Table 2 Parameters of batteries in Embodiments 1,2, 4 and 5 and Comparative Examples 2-3**

| Number | Loading of positive electrode | Area density of positive electrode g/cm² | Proportion of lithium iron phosphate material | Proportion of ternary material | Maximum compacted density of positive electrode g/cm³ |
|---|---|---|---|---|---|
| Embodiment 1 | 96% | 20 | 99% | 1% | 2.56 |
| Embodiment 2 | 96% | 20 | 90% | 10% | 2.6 |
| Embodiment 4 | 96% | 20 | 80% | 20% | 2.7 |
| Embodiment 5 | 96% | 20 | 70% | 30% | 2.8 |
| Comparative Example 2 | 96% | 20 | 100% | 0% | 2.55 |
| Comparative Example 3 | 96% | 20 | 0 | 100% | 3.5 |

The lithium-ion batteries of Embodiments 1-4 and the batteries of Comparative Examples 2 and 3 were respectively subjected to low-temperature energy retention rate tests. Referring to Table 3, an energy retention rate of the lithium-ion batteries at -20°C was better than that of the lithium iron phosphate material battery of Comparative Example 2. In other words, if mass percentages of the lithium iron phosphate material and the ternary material in the positive electrode active composite are X and Y, respectively, 60% ≤ X ≤ 99% and 1% ≤ Y ≤ 40%.

**Table 3 Parameters of batteries in Embodiments 1,2, 4 and 5 and Comparative Examples 2-3**

| Number | Loading of positive electrode | Area density of positive electrode g/cm² | Proportion of lithium iron phosphate material | Proportion of ternary material | Energy retention rate of SAh soft pack battery at -20°C g/cm³ |
|---|---|---|---|---|---|
| Embodiment 1 | 96% | 20 | 99% | 1% | 56.2% |
| Embodiment 2 | 96% | 20 | 90% | 10% | 57.9% |
| Embodiment 4 | 96% | 20 | 80% | 20% | 63.5% |
| Embodiment 5 | 96% | 20 | 70% | 30% | 68.2% |
| Comparative Example 2 | 96% | 20 | 100% | 0% | 55% |
| Comparative Example 3 | 96% | 20 | 0 | 100% | 75% |

Although the embodiments of the present disclosure have been described in detail above, it is obvious to those skilled in the art that various modifications and changes can still be made to these embodiments.

## Claims

1. A positive electrode active composite for a lithium-ion battery, **characterized in that** the positive electrode active composite consists of 60%-99% by weight of a lithium iron phosphate material and 1%-40% by weight of a ternary material.

2. The positive electrode active composite of claim 1, **characterized in that** the ternary material comprises lithium nickel manganese cobalt oxide or lithium nickel cobalt aluminum oxide.

3. A positive electrode material for a lithium-ion battery, comprising:
a binder;
a conductive agent; and
the positive electrode active composite according to any one of claims 1-2.

4. A positive electrode of a lithium-ion battery, comprising:
a current collector; and
a positive electrode material according to claim 3;
wherein the positive electrode material is coated on or filled in the current collector.

5. A lithium-ion battery, comprising:
a cell; and
an electrolyte;
wherein the cell comprises the positive electrode according to claim 4, a negative electrode and a separator; and
the separator is located between the positive electrode and the negative electrode.

6. The lithium-ion battery according to claim 5, **characterized in that** the electrolyte comprises an electrolyte additive, and the electrolyte additive is selected from the group consisting of a boron-containing additive, a sulfur-containing additive and a carbonate additive.

7. A lithium-ion battery device, comprising:
a voltage control module; and
the lithium-ion battery according to any one of claims 5-6;
wherein the voltage control module comprises a storage unit, a monitoring unit and a control unit;
the storage unit is configured to store a preset voltage value, wherein the preset voltage value comprises an upper limit voltage value V1, and the upper limit voltage value V1 is greater than or equal to 3.8 V and less than or equal to 4.0 V;
the monitoring unit is configured to monitor an operating voltage of the lithium-ion battery and generate an operating voltage value V0; and
the control unit, the storage unit and the monitoring unit are electrically connected with each other, and the voltage control module is configured to control the lithium-ion battery to stop being charged when the operating voltage value V0 is greater than or equal to the upper limit voltage value V1.

8. The lithium-ion battery device according to claim 7, **characterized in that** the preset voltage value further comprises a lower limit voltage value V2, and the lower limit voltage value V2 is greater than or equal to 2 V and less than or equal to 2.8 V; and the voltage control module is configured to control the lithium-ion battery to stop discharging when the operating voltage value V0 is less than or equal to the lower limit voltage value V2.

9. A method for operating the lithium-ion battery according to any one of claims 5-6, comprising:
controlling an operating voltage value V0 of the lithium-ion battery to be less than or equal to an upper limit voltage value V1;
wherein the upper limit voltage value V1 is greater than or equal to 3.8 V and less than or equal to 4.0 V.

10. The method according to claim 9, further comprising:
controlling the operating voltage value V0 of the lithium-ion battery to be greater than or equal to a lower limit voltage value V2;
wherein the lower limit voltage value V2 is greater than or equal to 2 V and less than or equal to 2.8 V.

11. An active lithium replenishment method for the lithium-ion battery according to any one of claims 5-6, comprising:
charging the lithium-ion battery to an activation voltage V3;
wherein the activation voltage V3 is greater than or equal to 4.1 V and less than or equal to 4.4 V.
